# EUROPÄISCHE PATENTANMELDUNG

(11) **EP 1 428 649 A1**
(43) Veröffentlichungstag der Anmeldung: **16.06.2004**
(21) Anmeldenummer: 03400070.3
(22) Anmeldetag: 12.12.2003
(51) Int. Cl.: B29C 70/44, B29C 37/02, B29C 33/38, F41H 5/04

(54) **Verfahren zur Herstellung von dreidimensionalen Bauteilen**

(30) Priorität: 13.12.2002 DE 10258935
(71) Anmelder: Nitec Engineering GmbH, 56651 Niederzissen (DE)
(72) Erfinder: Gerl, Oswald, 53179 Bonn (DE); Eckert, Thomas, 53498 Bad Breisig (DE)
(74) Vertreter: Rumrich, Gabriele, Dipl.-Ing.

(57) **Zusammenfassung**

Die Erfindung betrifft ein Verfahren zur Herstellung von dreidimensionalen Bauteilen aus Lagen auf der Basis hochfester Fasern mit thermoplastischer Matrix. Erfindungsgemäß werden die Lagen mit der thermoplastischen Matrix in einem Autoklaven unter Druck und Temperatur zu einem Bauteil verbunden.

## Beschreibung

Die Erfindung betrifft ein Verfahren zur Herstellung von dreidimensionalen Bauteilen nach dem Oberbegriff des ersten Patentanspruchs aus Faserzuschnitten auf der Basis hochfester Fasern mit thermoplastischer Matrix.

Kugelschutz aus Leichtbauteilen für beispielsweise Westen, Helme und Fahrzeuge sind seit langem bekannt (z.B. EP 0 089 537, DE 35 03 268). Sie bestehen aus mehreren Lagen von Textilgarnen wie Poly (p-Phenylen-Terephthalamid) oder ultra-hoch-molekularen Polyethylen- oder Polypropylenfasern mit hoher Festigkeit.

Solch ein Verbund eines dreidimensionalen Bauteils aus Polyethylen mit thermoplastischer Matrix wird üblicherweise in beheizbaren Pressformen hergestellt (US 5723388). Während des Verpressens wird der Verbund soweit aufgeheizt, bis ein Plastifizieren der Matrix eintritt und ein Verschmelzen der einzelnen Lagen erfolgt. Anschließend wird der Verbund soweit abgekühlt, bis die Glasübergangstemperatur unterschritten ist.

Der Nachteil dieses Verfahrens ist in den sehr hohen Werkzeug- und Energiekosten zu sehen. Letztere entstehen durch das Aufheizen und Abkühlen der Pressformen. Diese müssen aufgrund hoher Pressdrücke sehr stabil ausgelegt werden. Die Folge der hohen Werkzeugkosten ist, dass große Stückzahlen von Bauteilen produziert werden müssen, bis sich das Werkzeug amortisiert hat.

Es ist ebenfalls die Autoklav-Prepregtechnik bekannt, wobei mit einer genauen Harzmenge vorimprägnierte Faserzuschnitte in eine Form eingelegt werden und in der Form unter Druck und Temperatur das Aushärten des flüssigen/teilflüssigen Harzes erfolgt. Dieses Verfahren ist so jedoch für Faserzuschnitte auf der Basis hochfester Fasern mit (fester) thermoplastischer Matrix nicht geeignet.

Es bestand daher die Aufgabe, ein Verfahren zu entwickeln, welches eine flexible, kostengünstige Fertigung dreidimensionaler Bauteile geringer Stückzahlen ermöglicht, wobei die Bauteile aufgrund ihrer besonders guten physikalischen Eigenschaften insbesondere zum Einsatz als Panzerungen geeignet sein sollen.

Die Aufgabe wurde mit den Merkmalen des ersten Patentanspruchs gelöst. Dabei besteht das erfindungsgemäße Verfahren zur Herstellung von dreidimensionalen Bauteilen aus Lagen in Form von Zuschnitten aus hochfesten Fasern mit thermoplastischer Matrix darin, dass die Lagen mit der thermoplastischen Matrix in einem Autoklaven unter Druck und Temperatur zu einem Bauteil verbunden werden.

Dazu werden mehrere Teilschritte durchgeführt , wobei zuerst mit der Konstruktion eines Bauteils z.B. mittels Computer-Software begonnen wird. Anschließend wird ein Urmodell hergestellt, wofür sich thermoplastisches Plattenmaterial, vorzugsweise aus einem Epoxydharz, gut eignet und auf Basis des Urmodells eine Form, bevorzugt eine mit Kohlenstofffasern verstärkte Prepregform (CFK) gefertigt. Prepreg ist dabei eine Abkürzung für vorimprägniertes Kohlenstoff-Faser-Gewebe oder -Lagen.

Diese CFK (Kohlenstoff-Faser-Kunststoff) - Prepregform wird im Autoklav ausgehärtet.

Die Zuschnitte aus den hochfesten Fasern mit thermoplastischer Matrix werden nun lagenweise in die vorher hergestellte Prepregform eingelegt. Dabei finden vorzugsweise Fasern aus Polyethylen, vorzugsweise ultrahoch-verstrecktes Polyethylen, insbesondere Dyneema® (eine Marke der Fa. Toyobo, Japan) Anwendung. Anschließend erfolgt in einer Folie ein Vakuumverpacken der in der Form befindlichen Lagen mit anschließendem Plastifizieren durch Temperaturerhöhung, vorzugsweise von 125°C, im Autoklav. Zum Verformen (Anpressen der Lagen an die Form) und Verdichten der Lagen wird im Autoklav ein Druck von 12 bis 20 bar, vorzugsweise von 14 bar, aufgebaut und unter diesem Autoklavdruck und anschließendem Vakuum wird dann bis unter die Glasübergangstemperatur im Autoklaven abgekühlt. Die Bauteile werden letztendlich entformt und mittels Wasserstrahl-Schneiden beschnitten.

Bauteile aus Kohlenstofffaserverstärkten Kunststoffen (CFK) besitzen ein hohe Festigkeit (mind. 800 MPa) und ein sehr geringes spezifisches Gewicht (1,55 kg/dm³). Daher werden sie als Leichtbauelemente für Panzerungen, aber auch in der Luftfahrtindustrie eingesetzt.

Als Polyethylen wird im erfindungsgemäßen Verfahren in einer besonderen Ausführungsform ein besonderes Produkt, nämlich Dyneema®, verwendet. Es handelt sich hierbei um ein ultra-hoch-verstrecktes/festes Produkt mit geringer Dichte (0,97 g/cm³) und extrem hoher Schlagfestigkeit und Zugfestigkeit (3,10 N/Tex). Ein Seil aus diesem Material mit einem Durchmesser von 1 mm² kann bis zu 240 kg an Gewicht tragen. Die Bruchdehnung beträgt 3,60 %. Außerdem besitzt das Produkt eine ausgezeichnete Flexibilität und Lichtstabilität sowie hohe Resistenz gegen Chemikalien (in einem weiten pH-Bereich) und Abrieb. Dyneema® ist leicht herzustellen und bietet eine Vielzahl von Anwendungen. Besonders geeignet ist es für den Ultraleichtbau und aufgrund seiner physikalischen Eigenschaften insbesondere für Panzerungen.

Die Erfindung wird nachfolgend anhand eines Ausführungsbeispieles näher erläutert.

Zur Herstellung einer Panzerung (z.B. für Sonderschutzfahrzeuge) wird das Panzerungsbauteil z.B. am Computer konstruiert. Auf dieser Basis wird ein Urmodell aus Epoxydharzplattenmaterial hergestellt. Auf der Basis des Urmodells wird eine Negativform aus CFK gefertigt, deren Aushärtung im Autoklaven erfolgt. Diese Form dient als Prepregform für die anschließende Herstellung des Panzerungsbauteils.

Für die Fertigung eines Panzerungsbauteils z.B. aus "Dyneema" werden die benötigten Lagen von Zuschnitten aus Fasermaterial (Matten) mit einer thermoplastischen Matrix in die Prepregform eingelegt. Anschließend erfolgt ein Vakuumverpacken in Plastikfolie.

Nun wird die Prepregform mit den darin befindlichen Lagen in einen Autoklaven eingelegt. In diesem erfolgt unter Druck eine Temperaturerhöhung auf 125°C bis zur vollständigen Plastifizierung der Matrix. Nun wird der Druck im Autoklaven unter Beibehaltung der Plastifizierungstemperatur bis auf 14 bar erhöht, so dass sich die Lagen an die Form anlegen und verpresst werden.

Der Druck wird dabei für 50 bis 80 Minuten aufrecht erhalten.

Nun wird die Temperatur im Autoklaven unter dem Druck von 14 bar und unter Vakuum bis unter die Glastemperatur gesenkt, so dass die thermoplastische Matrix sich wieder verfestigt.

Anschließend werden die Form und das Bauteil aus dem Autoklaven entnommen und das Bauteil entformt. Abschließend erfolgt ein Randbeschnitt des Bauteils z.B. mit Wasserstrahlschneiden.

Durch den allseitig gleichen Druck im Autoklaven wird dabei eine sehr gleichmäßige Verdichtung aller Lagen erzielt, wodurch im fertigen Bauteil keine unerwünschten Spannungen und kein Verzug eintritt, wie es bei in einer Presse hergestellten Teilen vorkommen kann.

Die unidirektionale Matrix in Verbindung mit der absolut gleichmäßigen Verdichtung und Verfestigung gewährleistet dabei hervorragende ballistische Eigenschaften.

Erstmalig erfolgt im Autoklaven nicht wie bisher die Aushärtung einer Matrix aus Duroplast (z.B. teilflüssiges Harz) eines herkömmlichen Prepregs, sondern es wird unter Druck und Temperatur eine thermoplastische Matrix plastifiziert, wodurch sich die einzelnen Lagen verdichten und an die Form anlegen, und anschließend die thermoplastischen Matrix bis zu deren Verfestigung abgekühlt.

Mit dem erfindungsgemäßen Verfahren wurde eine elegante Methode gefunden, Leichtbauteile insbesondere für Panzerungen, kostengünstig herzustellen.

## Patentansprüche

1. Verfahren zur Herstellung von dreidimensionalen Bauteilen aus Lagen auf der Basis hochfester Fasern mit thermoplastischer Matrix, **dadurch gekennzeichnet, dass** die Lagen mit der thermoplastischen Matrix in einem Autoklaven unter Druck und Temperatur zu einem Bauteil verbunden werden.

2. Verfahren nach Anspruch 1, **dadurch gekennzeichnet, dass**
a) die Lagen mit der thermoplastischer Matrix schichtweise in eine Form, eingelegt werden,
b) ein Vakuumverpacken der in der Form befindlichen Lagen erfolgt,
c) Form und darin vakuumverpackte Lagen in den Autoklaven eingelegt werden und unter Druckaufbau die Temperatur im Autoklaven bis zur Plastifizierung der thermoplastischen Matrix der Lagen erhöht wird,
d) im Zustand der plastifizierten thermoplastischen Matrix im Autoklav ein die Lagen verdichtender und an die Form anformender Autoklavdruck aufgebaut wird,
e) unter Autoklavdruck und Vakuum eine Abkühlung bis zur Verfestigung der thermoplastischen Matrix der Lagen erfolgt und
f) nach der Aushärtung das aus aus den Lagen hergestellte Bauteil aus der Form entnommen wird.

3. Verfahren nach Anspruch 1 oder 2, **dadurch gekennzeichnet, dass** der Autoklavdruck für die Verfahrensschritte d), und e) 12 bis 20 bar beträgt.

4. Verfahren nach Anspruch 3, **dadurch gekennzeichnet, dass** der Autoklavdruck 14 bar beträgt.

5. Verfahren nach einem der Ansprüche 1 bis 4, **dadurch gekennzeichnet, dass** zum Erreichen und erhalten der Plastifizierung der thermoplastischen Matrix nach den Verfahrensschritten c) und d) eine Temperatur von mindestens 125°C aufgebracht wird.

6. Verfahren nach einem der Ansprüche 1 bis 5, **dadurch gekennzeichnet, dass** beim Verfahrensschritt e) eine Abkühlung bis unter die Glasübergangstemperatur erfolgt.

7. Verfahren nach einem der Ansprüche 1 bis 6, **dadurch gekennzeichnet, dass** die Form eine Prepragform ist, die aus Kohlenstoff-faser-verstärktem Kunststoff (CFK) gefertigt ist.

8. Verfahren nach Anspruch 7, **dadurch gekennzeichnet, dass** die Prepregform auf Basis eines Urmodells aus Epoxydharzplatten hergestellt wird.

9. Verfahren nach Anspruch 7, **dadurch gekennzeichnet, dass** das zu fertigende Bauteil mittels Computersoftware konstruiert und danach das Urmodell gefertigt wird.

10. Verfahren nach einem oder mehreren der Ansprüche 1 bis 9, **dadurch gekennzeichnet, dass** hochfeste Fasern aus Polyethylen eingesetzt werden.

11. Verfahren nach Anspruch 10, **dadurch gekennzeichnet, dass** ultra-hoch-reißfeste Polyethylenfasern eingesetzt werden.

12. Verfahren nach einem der Ansprüche 1 bis 11, **dadurch gekennzeichnet, dass** das Bauteil nach dem Entformen mittels Wasserstrahl-Schneiden beschnitten wird.
